# EUROPEAN PATENT SPECIFICATION

(11) **EP 1 017 632 B1**
(45) Date of publication and mention of the grant of the patent: **08.01.2003**
(21) Application number: 98946422.7
(22) Date of filing: 25.08.1998
(51) Int. Cl.: C02F 1/44, B01D 61/02, B05B 15/12

(54) **METHOD OF TREATING THE CIRCULATION WATER FROM WET-WASH SPRAY BOOTHS**
VERFAHREN ZUR AUFBEREITUNG DES UMLAUFWASSERS AUS SPRITZKABINEN MIT NASSAUSWASCHUNG
PROCEDE DE TRAITEMENT DE L'EAU DE CIRCULATION PROVENANT DE CABINES DE PULVERISATION DE L'INDUSTRIE AUTOMOBILE

(30) Priority: 27.08.1997 EP 97114815
(43) Date of publication of application: 12.07.2000
(73) Proprietor: PPG Industries Lacke GmbH, 42329 Wuppertal (DE)
(72) Inventor: KASCHA, Dietmar, D-65760 Eschborn 2 (DE); MANDERSCHEID, Karl, D-50935 Köln (DE); LINDEMANN, Johannes, D-53619 Rheinbreitbach (DE)
(74) Representative: Sternagel, Fleischer, Godemeyer & Partner Patentanwälte
(86) International application number: EP9805368
(87) International publication number: WO99010284

(56) References cited:
- EP-A- 0 523 415
- EP-A- 0 536 648
- EP-A- 0 553 684
- DE-A- 4 207 425
- DE-A- 4 406 952
- DE-A- 4 413 304
- DE-A- 19 519 846
- RODERICK J. RAY: "Membrane-based hybrid processes for energy-efficient waste-water treatment" JOURNAL OF MEMBRANE SCIENCE, vol. 28, no. 1, August 1986, pages 87-106, XP002055681 AMSTERDAM, NL

## Description

The present invention relates to a method of treating the circulation water from wet-wash spray booths and to a method of circulating the water from wet-wash spray booths.

Modern coating lines for the finishing of car bodies use spray booths with wet deposition of the overspray obtained. Water is sprayed to generate, within the spray booth, a finely divided water mist which takes up the paint constituents of the overspray and discharges them from the booth owing to the reduced pressure which prevails within the spray booth. The downstream water separators then collect the water loaded with paint constituents. Owing to current effluent legislation, the spray booth water must be circulated.

In a process currently employed in industry for circulating the water from wet-wash spray booths, the water is passed from the separator to a system tank. Therein separation takes place, preferably by flotation of the deposited and coagulated paint constituents, as a result of which the paint constituents collect in the upper region of the tank. Alternatively, this separation can take place by sedimentation, either directly within the system tank or in a part-stream. In the process described above, the water in the lower region of the tank is substantially free of solid paint constituents and is drawn off in the lower region from the system tank, admixed with coagulant, and passed back to the spray booth. In the upper region of the system tank, the water fraction enriched with the coagulated paint constituents is taken off and passed to a solid/liquid separation unit, preferably a flotation unit. The water obtained in this case, which has substantially been freed of the paint constituents, is passed back into the system tank. In this way, it is indeed possible substantially to free the spray booth water from coagulatable paint constituents; however, circulation results in a gradual concentration of all of the dissolved constituents, such as salts and water-soluble paint constituents and colloidal, non-coagulatable paint constituents. This concentration process leads not only to corrosion problems but also to emission problems. This can be attributed in particular to the fact that, owing to the reduced pressure in the spray booth and to the fine division of the water mist, both part of the salt-loaded water and, in particular, readily volatile organic compounds pass into the waste air, with the entrained salt in particular leading to corrosion problems in the waste air system. In addition, the gradual concentration of soluble and colloidal organic constituents may lead to biological contamination of the circulation water, bringing about decay processes and associated development of odor. In practice this means that at certain intervals of time, generally twice a year, the circulation water has to be changed completely. The restricted circulation water service lives are a result of the high evaporation losses of circulation water (for example, up to 15% per day based on the system volume), which must then be compensated by adding clean water. Attempts have therefore also been made to reduce the problems described above by using ever more high-quality grades of added water. These high-quality added water grades, however, considerably increase the operating costs of the unit. Moreover, they have enabled only a slight increase to be achieved in the time which elapses before the entire spray booth circulation water is changed. The actual problem of concentration, however, is not solved by this means. It continues to be necessary to change the spray booth circulation water at regular intervals. These coating effluents are nowadays dealt with either by treatment in the effluent plants or by incineration. Both procedures are costly and also lead to additional emissions, which should be avoided on environmental grounds.

There is therefore a need in industry both for a method of treating spray booth circulation waters and for a method of circulating the spray booth waters both of which methods solve the problem of the concentration of unwanted substances in the spray booth circulation water while keeping both the treatment costs and the emission of harmful substances as low as possible.

EP-A-0 675 080 discloses a method of concentrating the over-spray produced in wet-wash spray booths by means of multistage membrane filtration. In this method, the booth water/over-spray mixture to be concentrated is concentrated initially in an ultrafiltration stage by separating it into a retentate and a permeate, the latter containing low molecular mass constituents. The ultrafiltration permeate is passed, together with a nanofiltration permeate, to a reverse osmosis stage. The retentate from the reverse osmosis and the retentate from the ultrafiltration are passed to a nanofiltration stage, where they are separated into a retentate and a permeate. The retentate from the nanofiltration corresponds largely in terms of concentration and paint composition to the aqueous coating material employed and can therefore be used directly for that purpose or as a constituent of a coating composition. The permeate from the reverse osmosis can be passed back into the booth water circuit.

The key point of this method is that even the low molecular mass constituents of the paint, such as crosslinking agents, are separated off and recycled into the concentrated retentate from the ultrafiltration. With this method, ultimately, the concentration of the paint constituents of the booth water/over-spray mixture takes place with the separation of water. In particular, however, the problem occurs with this method that constituents which pass through the nanofiltration stage but are retained in the reverse osmosis are, in this method, circulated, so that here again there is an unwanted concentration. This relates to the organic constituents in particular, so that here again the problems described above may be expected. Since the method described in EP-A-675 080 employs a different technique of paint treatment, it cannot be integrated directly into existing processes for circulating the spray booth water. Consequently, in addition to the disadvantages described above for this method, considerable investment is necessary in order to convert existing coating units to the method described in EP-A-675 080.

The method disclosed in EP 0 523 415 A exclusively refers to the use of salt-free water as circulation water in a spray booth. The evaporation unit in said method is only used to concentrate the circulation water in order to obtain a recycled coating composition. Thus EP 0 523 415 A does not disclose the separation of a retentate, for example of an ultrafiltration unit into a solids fraction and a volatile fraction.

EP-A-553 684 discloses a process to recover water-based coating compositions resulting from over-spray collected in the circulation water of the spray booth to avoid sedimentation problems associated with the solid content in the circulation water. This process includes the concentration of the circulation water in two subsequent steps using ultra-filtration units. The permeate of both separation steps can be returned into the circulation water of the spraying booth. In a preferred embodiment the permeate of the final concentration step is treated in a reverse osmosis unit to additionally recover low molecular weight ingredients introduced into the system by the over-spray. Like EP-A-675 080 this prior art document is also concerned with the problem of recovering a product that can be directly used as recycling paint. Additionally the problem of sedimentation of solid components of water-based coating compositions is of less importance in processes currently used in industry, as discussed above, wherein paint constituents are anyway coagulated and removed from the system. Finally EP-A-553 684 only refers to the possibility to recover low molecular weight constituents of the water-based coating composition from the concentrate of the reverse osmosis in a treatment unit for water-based coating compositions.

The article of R.J. Ray et al., "Membrane-based hybrid processes for energy-efficient waste-water treatment", Journal of Membrane Science, Vol. 28 (1986), pp. 87-106 discusses the combination of a reverse osmosis unit with an evaporation unit. Said article deals with the treatment of steep water from steeping corn to produce sweeteners and in a second embodiment with a membrane-based hybrid system for treating space station wash water.

It is therefore an object of the present invention to provide a method of cost-effectively treating the circulation water from wet-wash spray booths which can be used for environmentally compatible recycling of used spray booth circulation water and which in particular can be integrated simply into existing methods of circulating the water from wet-wash spray booths in order to prevent the concentration of unwanted constituents of the circulation water.

This object is achieved by a method of treating the circulation water from wet-wash spray booths by:
A passing at least a fraction of the circulation water to a reverse osmosis stage,
B separating the circulation water into a retentate and into a permeate in the reverse osmosis stage,
C separating the retentate from the reverse osmosis into a solids fraction and into a volatile fraction in an evaporator unit,
D condensing the volatile fraction from stage C,
E utilizing the permeate from stage B, the solids fraction from stage C and the condensate from stage D.

In a preferred embodiment of the present invention, the permeate in the reverse osmosis and the condensate from the evaporator stage are combined and utilized together, being preferably passed back into the circulation water circuit.

Alternatively, the permeate from reverse osmosis can be passed back alone into the circulation water circuit and the condensate from the evaporator stage can be utilized separately. With this method it is possible by means of reverse osmosis to concentrate the constituents of the circulation water to a minimum in terms of volume and a maximum in terms of material concentration. In accordance with the method of the invention it is possible by means of reverse osmosis to concentrate the retentate to a content of dissolved and/or colloidal constituents of up to 25% by weight - in a multistage process regime, of up to 50% by weight. Owing to the small fraction of water in the retentate from the reverse osmosis stage, the non-volatile constituents can be separated off in the downstream evaporator unit with low energy consumption and thus at low cost.

The reverse osmosis of the invention is a membrane separation technique, using membranes which retain at least 95% by weight, preferably at least 98% by weight and, more preferably, at least 99% by weight of sodium chloride. The transmembrane pressure difference is normally between 15 and 100 bar, preferably between 20 and 60 bar and, more preferably between 20 and 50 bar. In this case, a permeate flow of from 3 to 10 l/m² h is achieved.

Customary membrane modules are suitable for the reverse osmosis, such as spiral modules, tubular modules, capillary modules and hollow-fibre modules. The membranes may be made of polyacrylonitrile, polyolefin, such as polypropylenes or polyethylene, porous carbon, polyurea, aromatic or aliphatic polyamides, sulphonated polyaryl ethers, polyfuran, polybenzimidazole, various fluoro polymers, polyether aromatics, such as polyimide or polyimidazolepyrrolidone, or similar materials. The appropriate membrane material should be selected in accordance with the solvents present in the circulation water, note being taken of the resistance to these solvents. Polyamide membranes have been found to be particularly suitable.

Using a reverse osmosis stage of this kind, according to the invention, it is possible to obtain a permeate which is essentially free of dissolved substances. For the purposes of the present invention "essentially free" means a concentration of dissolved substances in the reverse osmosis permeate of less than 0.2% by weight, based on the overall mass of the permeate, preferably of less than 0.1% by weight, more preferably of less than 0.05% by weight and, most preferably, of less than 0.01% by weight. The separation effect can be improved further, if required, by a multistage reverse osmosis method.

In an advantageous embodiment of the method of the invention, the reverse osmosis stage is preceded by a filtration stage in which the circulation water is separated into a retentate and into a permeate, and the permeate is passed to the reverse osmosis stage. This is advantageously done using a particle filtration technique, preferably a dynamic membrane filtration technique with a porous microfiltration membrane having a pore size of 0.05 - 5 µm, preferably of 0.1 - 0.2 µm, which, as a protective filter for the downstream reverse osmosis, removes the dispersed constituents from the circulation water.

In an alternative embodiment, the protection filter used can be an ultrafiltration stage. For the purposes of the present invention, the ultrafiltration is likewise a membrane separation technique which is carried out with membranes having a cutoff point of from 200 to 500,000 Da, preferably from 1000 to 250,000 Da. The pressure difference between entry and exit of the module in the ultrafiltration of the invention is from 0.5 to 5 bar, preferably less than 1 bar. With this mode of operation it is possible to achieve a permeate flow of from 10 to 80 l/m² h, preferably from 15 to 50 l/m² h. The transmembrane pressure difference in the ultrafiltration is between 1 to 5 bar.

For the microfiltration or ultrafiltration unit employed in the method of the invention, all customary commercial membrane modules are suitable, such as cushion modules, plate modules, spiral modules, tubular modules, capillary modules, multichannel modules or hollow-fibre modules. The membrane materials used can be those already described in connection with the reverse osmosis unit. Additional suitable membrane materials are Teflon and ceramic (such as e.g. silicon carbide and alumina). The person skilled in the relevant art knows how to select the appropriate ultrafiltration unit for the separation task in hand. Modules which have been found to be particularly suitable for the ultrafiltration stage of the invention are multichannel modules or tubular modules with alumina, silicon carbide, polyvinylidene fluoride and polyacrylonitrile membranes.

It was surprisingly found, that the retentate of the reverse osmosis unit containing water-soluble and water-dispersible components of the over-spray can be successfully concentrated in an evaporator unit without experiencing problems related to processibility, despite the fact that the retentate contains reactive low molecular weight organic components like crosslinkers and that side reactions thereof especially at elevated temperatures leading to undesired products fouling the evaporation unit may be difficult to control. The evaporation step can be carried out at temperatures above 100°C e.g. at super-atmospheric pressure or at temperatures below 100°C.

The circulation water from wet-wash spray booths normally contains sulfate as well as organic contamination that are concentrated in the retentate of the reverse osmosis unit. Both may result in the growth of microorganisms that produce odorous side products like sulfur containing organic compounds. This effect is normally less pronounced in operating wet-wash spray booths since due to the water spraying process huge amounts of oxygen are introduced into the circulating water, thereby avoiding anaerobic conditions in the system. But it was discovered that the above described growth of microorganisms may occur under certain conditions in the evaporation unit resulting in undesired odorous products. It was surprisingly found, that odorous side products can be avoided in the evaporation step by controlling the temperature in the evaporation unit. Thus in a preferred embodiment of the present invention the evaporation step is carried out at a temperature in the range of 25°C to 60°C to avoid the build-up of odor. A preferred temperature range is 30°C to 45°C. The most preferred range resulting in good process efficiency and very low odor is 35°C to 40°C.

This preferred temperature conditions can be most suitable achieved in a vacuum evaporation process or alternatively in a circulating air evaporation process.

A particular advantage of the method described above is that it can easily be integrated into existing processes for circulating the water from wet-wash spray booths. Therefore, by integrating the method described above, a method of circulating the water from wet-wash spray booths is provided, by:
A passing the water, loaded with coagulated paint constituents, non-coagulatable organic constituents and salts, from the spray booth into a system tank,
B diverting a mixture of water and coagulated paint constituents from the system tank into a solid/liquid separation unit,
C passing a water fraction which is essentially free of coagulated paint constituents from the system tank back into the spray booth,
and then subjecting at least part of the aqueous phase from the solid/liquid separation unit to the method described above in its various embodiments. The permeate from the reverse osmosis and/or the condensate from the evaporator unit are/is then passed back into the system tank.

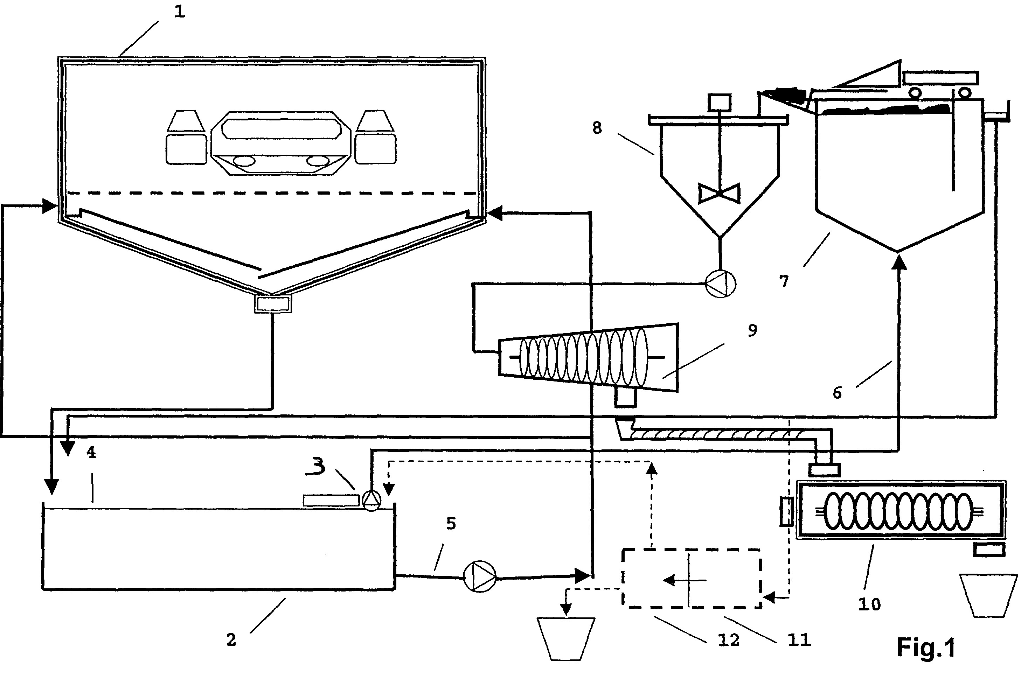

The principle of the method of the invention, integrated into a method of circulating the spray booth circulation water, is illustrated in Figure 1.

Figure 1 shows a conventional wet-wash spray booth 1 from which the water, loaded with paint constituents, is passed into a system tank 2. In the system tank 2, a defoamer 4 is added additionally to the aqueous phase. The coagulated paint constituents float in the system tank 2 and are removed from the system tank 2 with a suction apparatus 3. The mixture of water and coagulated paint constituents is then passed, following the addition of a flotation agent, to a flotation unit 7. The paint sludge obtained in the flotation unit 7 is led conventionally into a dryer 10 by passing it via a sludge buffer 8 and a decanter 9, and finally is discharged from the system. At least some of the aqueous phase from the flotation unit 7 is subjected to a separation method in accordance with the present invention. This phase is first transferred to a microfiltration unit (not shown), with the retentate from the microfiltration unit being passed back into the flotation unit 7. The permeate from the microfiltration unit is passed to a reverse osmosis unit 11 and is separated into a permeate and into a retentate. The permeate from the reverse osmosis 11 is passed back into the system tank. The concentrate from the reverse osmosis unit 11 is passed to an evaporator 12, with the volatile constituents, after they have condensed, being passed back into the system tank 2, and the non-volatile constituents being removed from the system. In the embodiment shown in Figure 1, the method of the invention is applied to a part-stream of the paint-containing circulation water of a customary coating unit. This has the advantage that conventional units can be fitted out at minimum expense and an equilibrium state in terms of the concentration of dissolved and, respectively, colloidal constituents in the booth circulation water can be established with relative simplicity.

Another advantage of the present method is that now even water of relatively low purity can be added as top-up water to the spray booth circulation water, which makes the operation of such units considerably less expensive. A further advantage of this method is that it can very easily be adapted to changed circumstances by adjusting the proportion of the part-stream which is passed back directly from the solid/liquid separation unit 7 into the system tank 2 to the part-stream which is passed via the method of the invention.

The examples below are given to emphasize the effectiveness of the method of the invention:

### Example 1

Circulation water from an industrial coating unit with wet-wash spray booths was passed in accordance with the method set out above via a microfiltration unit (multichannel element with Al₂O₃ membrane, pore size 0.1 µm) and a reverse osmosis unit (polyamide membrane with a NaCl retention of greater than 99.5%). Tables I and II indicate the quality of the circulation water and the quality of the permeate from the reverse osmosis stage.

**Table I**

| Parameter | | Before Treatment | and after | Reduction in % |
|---|---|---|---|---|
| pH | | 6.9 | 6.8 | |
| Conductivity | in µS/cm | 6810 | 44 | 99.3 |
| Chloride | in ppm | 546 | 4.4 | 99.2 |
| Sulphate | in ppm | 3016 | <150 | 95.1 |
| Solids content | in % | 1.6 | 0.06 | 96.3 |
| COD | in ppmO₂ | 28,000 | <150 | 99.5 |

### Example 2

The method illustrated in Example 1 was repeated with the circulation water from a different industrial coating unit. The results are summarized in Table II.

**Table II**

| Parameter | | Before Treatment | and after | Reduction in % |
|---|---|---|---|---|
| pH | | 6.06 | 6.75 | |
| Conductivity | in µS/cm | 7600 | 30 | 99.61 |
| Chloride | in ppm | 1100 | 5 | 99.55 |
| Sulphate | in ppm | 3170 | 29.5 | 99.07 |
| Solids content | in % | 1.6 | 0.06 | 96.3 |
| COD | in ppmO₂ | 19,936 | 30.8 | 99.85 |

The results given in Tables I and II show clearly that with the aid of the method of the invention the substances which become concentrated in usual spray water circuits and cause the problems described at the outset can be substantially removed. From this it becomes clear that in the case of common coating units it is possible, by using the method of the invention and without great alterations and investment, both to reduce the costs for the treatment of used booth circulation waters and, by establishing a low salt concentration in the circulation water, to bring about a marked reduction in the corrosion problems, and also, by lowering the proportion of organic constituents in the circulation water, to achieve a marked reduction in the emission of organic substances and in biological contamination. Only the use of the method of the invention makes it possible to guide the circulation water for wet-wash spray booths in a closed circuit.

## Claims

1. Method of treating the circulation water from wet-wash spray booths (1) by:
(a) passing at least some of the circulation water to a reverse osmosis stage (11),
(b) separating the circulation water into a retentate and into a permeate in the reverse osmosis stage (11),
(c) separating the retentate from the reverse osmosis into a solids fraction and into a volatile fraction in an evaporator unit (12),
(d) condensing the volatile fraction from stage (c),
(e) utilizing the permeate from stage (b), the solids fraction from stage (c) and the condensate from stage (d).

2. Method according to Claim 1, **characterized in that** the reverse osmosis stage (11) is preceded by a filtration stage in which the circulation water is separated into a retentate and into a permeate, and the permeate is passed to the reverse osmosis stage (11).

3. Method according to Claim 2, **characterized in that** a particle filtration membrane, preferably a porous microfiltration membrane having a pore size of 0.05 µm - 5 µm, is used in the filtration stage.

4. Method according to Claim 2, **characterized in that** an ultrafiltration membrane having a cutoff point of from 200 to 500,000 Da, preferably from 1000 to 250,000 Da, is used in the filtration stage.

5. Method according to one of the preceding claims, **characterized in that** in the reverse osmosis stage (11) a membrane is used which retains at least 95% by weight, preferably at least 98% by weight, of sodium chloride.

6. Method according to one of the preceding claims, **characterized in that** the reverse osmosis is carried out in a plurality of stages.

7. Method according to one of the preceding claims, **characterized in that** the permeate from the reverse osmosis stage (11) and the condensate from the evaporator stage (12) are combined and utilized together, being preferably passed back into the circulation water circuit.

8. Method according to one of Claims 1 - 6, **characterized in that** the permeate from the reverse osmosis stage (11) is passed back into the circulation water circuit and the condensate from the evaporator stage (12) is utilized separately.

9. Method according to one of the preceding claims, **characterized in that** the evaporation stage is carried out at a temperature in the range of 25°C to 60°C, preferably 30°C to 45°C.

10. Method according to one of the preceding claims, **characterized in that** the evaporation unit (12) is selected from a vacuum evaporation unit and a circulating air evaporation unit.

11. Method of circulating the water from wet-wash spray booths (1) by:
(a) passing the water, loaded with paint constituents and salts, from the spray booth (1) into a system tank (2),
(b) diverting a mixture of water and coagulated paint constituents from the surface of the liquid from the system tank (2) into a solid/liquid separation unit (7),
(c) passing a water fraction which is essentially free of coagulated paint constituents from the lower region of the system tank (2) back into the spray booth (1),
**characterized in that** at least part of the aqueous phase from the solid/liquid separation unit (7) is subjected to the method according to Claims 1 - 10, the permeate from the reverse osmosis stage (11) and/or the condensate from the evaporator unit (12) being passed back into the system tank (2).

## Patentansprüche

1. Verfahren zur Aufbereitung des Umlaufwassers aus Sprühkabinen mit Nassauswaschung (1) durch:
(a) Führen wenigstens eines Teils des Umlaufwassers zu einer Umkehrosmosestufe (11),
(b) Auftrennen des Umlaufwassers in ein Retentat und in ein Permeat in der Umkehrosmosestufe (11),
(c) Auftrennen des Retentats aus der Umkehrosmose in eine Feststofffraktion und in eine flüchtige Fraktion in einer Verdampfereinheit (12),
(d) Kondensieren der flüchtigen Fraktion aus Stufe (c),
(e) Verwenden des Permeats aus Stufe (b), der Feststofffraktion aus Stufe (c) und des Kondensats aus Stufe (d).

2. Verfahren nach Anspruch 1, **dadurch gekennzeichnet, dass** der Umkehrosmosestufe (11) eine Filtrationsstufe vorgeschaltet ist, in der das Umlaufwasser in ein Retentat und in ein Permeat aufgetrennt wird und das Permeat zu der Umkehrosmosestufe (11) geführt wird.

3. Verfahren nach Anspruch 2, **dadurch gekennzeichnet, dass** eine Teilchenfiltrationsmembran, vorzugsweise eine poröse Mikrofiltrationsmembran mit einer Porengröße von 0,05 µm - 5 µm, in der Filtrationsstufe verwendet wird.

4. Verfahren nach Anspruch 2, **dadurch gekennzeichnet, dass** eine Ultrafiltrationsmembran mit einem Abtrennpunkt von 200 bis 500.000 Da, vorzugsweise von 1000 bis 250.000 Da, in der Filtrationsstufe verwendet wird.

5. Verfahren nach einem der vorstehenden Ansprüche, **dadurch gekennzeichnet, dass** in der Umkehrosmosestufe (11) eine Membran verwendet wird, die wenigstens 95 Gew-%, vorzugsweise wenigstens 98 Gew-%, Natriumchlorid zurückhält.

6. Verfahren nach einem der vorstehenden Ansprüche, **dadurch gekennzeichnet, dass** die Umkehrosmose in einer Vielzahl von Stufen durchgeführt wird.

7. Verfahren nach einem der vorstehenden Ansprüche, **dadurch gekennzeichnet, dass** das Permeat aus der Umkehrosmosestufe (11) und das Kondensat aus der Verdampferstufe (12) vereinigt und zusammen verwendet werden und vorzugsweise zurück in den Umlaufwasserkreislauf geführt werden.

8. Verfahren nach einem der Ansprüche 1-6. **dadurch gekennzeichnet, dass** das Permeat aus der Umkehrosmosestufe (11) in den Umlaufwasserkreislauf zurückgeführt wird und das Kondensat aus der Verdampferstufe (12) getrennt davon verwendet wird.

9. Verfahren nach einem der vorstehenden Ansprüche, **dadurch gekennzeichnet, dass** die Verdampferstufe bei einer Temperatur im Bereich von 25°C bis 60°C, vorzugsweise 30°C bis 45°C, betrieben wird.

10. Verfahren nach einem der vorstehenden Ansprüche, **dadurch gekennzeichnet, dass** die Verdampfereinheit (12) aus einer Vakuumverdampfereinheit und einer Umluftverdampfereinheit ausgewählt ist.

11. Verfahren des Zirkulierens des Wassers aus Sprühkabinen mit Nassauswaschung (1) durch:
(a) Leiten des Wassers, das mit Farbbestandteilen und Salzen beladen ist, aus der Sprühkabine (1) in einen Systemtank (2),
(b) Überführen einer Mischung aus Wasser und koagulierten Farbbestandteilen von der Oberfläche der Flüssigkeit aus dem Systemtank (2) in eine Fest-Flüssig-Trenneinheit (7),
(c) Führen einer Wasserfraktion, die im wesentlichen frei von koagulierten Farbbestandteilen ist, aus dem unteren Bereich des Systemtanks (2) zurück in die Sprühkabine (1).
**dadurch gekennzeichnet, dass** wenigstens ein Teil der wässrigen Phase aus der Fest-Flüssig-Trenneinheit (7) dem Verfahren nach einem der Ansprüche 1-10 unterworfen wird, wobei das Permeat aus der Umkehrosmosestufe (11) und/oder das Kondensat aus der Verdampferstufe (12) zurück in den Systemtank (2) geleitet werden.

## Revendications

1. Procédé de traitement de l'eau de circulation de cabines de pulvérisation à lavage humide (1) par :
(a) le passage d'au moins un peu de l'eau de circulation vers un stade d'osmose inverse (11),
(b) la séparation de l'eau de circulation en un produit de rétention et en un produit de perméation dans le stade d'osmose inverse (11),
(c) la séparation du produit de rétention de l'osmose inverse en une fraction de matières solides et en une fraction volatile dans une unité d'évaporation (12),
(d) la condensation de la fraction volatile du stade (c),
(e) l'utilisation du produit de perméation du stade (b), de la fraction de matières solides du stade (c) et du condensat du stade (d).

2. Procédé suivant la revendication 1, **caractérisé en ce que** le stade d'osmose inverse (11) est précédé d'un stade de filtration dans lequel l'eau de circulation est séparée en un produit de rétention et un produit de perméation, et le produit de perméation est amené au stade d'osmose inverse (11).

3. Procédé suivant la revendication 2, **caractérisé en ce qu'**une membrane de filtration de particules, avantageusement une membrane de microfiltration poreuse ayant une taille de pore de 0,05 µm-5 µm, est utilisée dans le stade de filtration.

4. Procédé suivant la revendication 2, **caractérisé en ce qu'**une membrane d'ultrafiltration ayant un point de porosité limite de 200 à 500.000 Da, avantageusement de 1.000 à 250.000 Da, est utilisée dans le stade de filtration.

5. Procédé suivant l'une quelconque des revendications précédentes, **caractérisé en ce que** dans le stade d'osmose inverse (11) on utilise une membrane qui retient au moins 95 % en poids, avantageusement au moins 98 % en poids, de chlorure de sodium.

6. Procédé suivant l'une quelconque des revendications précédentes, **caractérisé en ce que** l'osmose inverse est réalisée en une pluralité de stades.

7. Procédé suivant l'une quelconque des revendications précédentes, **caractérisé en ce que** le produit de perméation du stade d'osmose inverse (11) et le produit de condensation du stade d'évaporation (12) sont combinés et utilisés ensemble, étant avantageusement ramenés dans le circuit d'eau de circulation.

8. Procédé suivant l'une quelconque des revendications 1 à 6, **caractérisé en ce que** le produit de perméation du stade d'osmose inverse (11) est ramené dans le circuit d'eau de circulation et le condensat du stade d'évaporation (12) est utilisé séparément.

9. Procédé suivant l'une quelconque des revendications précédentes, **caractérisé en ce que** le stade d'évaporation est réalisé à une température allant de 25°C à 60°C, avantageusement de 30°C à 45°C.

10. Procédé suivant l'une quelconque des revendications précédentes, **caractérisé en ce que** l'unité d'évaporation (12) est choisie parmi une unité d'évaporation sous vide et une unité d'évaporation à circulation d'air.

11. Procédé de circulation de l'eau de cabines de pulvérisation à lavage humide (1) par :
(a) le passage de l'eau, chargée de constituants de peinture et de sels, de la cabine de pulvérisation (1) dans une cuve de service (2),
(b) la dérivation d'un mélange d'eau et de constituants de peinture coagulés de la surface du liquide de la cuve de service (2) dans une unité de séparation solide/liquide (7),
(c) le repassage d'une fraction d'eau qui est essentiellement exempte de constituants de peinture coagulés de la partie inférieure de la cuve de service (2) dans la cabine de pulvérisation (1),
**caractérisé en ce qu'**au moins une partie de la phase aqueuse de l'unité de séparation solide/liquide (7) est soumise au procédé suivant l'une quelconque des revendications 1 à 10, le produit de perméation du stade d'osmose inverse (11) et/ou le condensat de l'unité d'évaporation (12) étant repassés dans la cuve de service (2).
